# EUROPÄISCHE PATENTSCHRIFT

(11) **EP 1 135 283 B1**
(45) Veröffentlichungstag und Bekanntmachung des Hinweises auf die Patenterteilung: **13.11.2002**
(21) Anmeldenummer: 99965384.3
(22) Anmeldetag: 01.12.1999
(51) Int. Cl.: B60R 21/32

(54) **VORRICHTUNG ZUM STEUERN EINES INSASSENSCHUTZMITTELS EINES FAHRZEUGS**
DEVICE FOR CONTROLLING AN OCCUPANT PROTECTION MEANS OF A VEHICLE
DISPOSITIF DE COMMANDE D'UN MOYEN DE PROTECTION DES PASSAGERS D'UN VEHICULE

(30) Priorität: 01.12.1998 DE 19855452
(43) Veröffentlichungstag der Anmeldung: 26.09.2001
(73) Patentinhaber: SIEMENS AKTIENGESELLSCHAFT, 80333 München (DE)
(72) Erfinder: HERMANN, Stefan, D-93096 Köfering (DE)
(86) Internationale Anmeldenummer: DE9903811
(87) Internationale Veröffentlichungsnummer: WO00032450

(56) Entgegenhaltungen:
- EP-A- 0 305 654
- US-A- 5 185 701

## Beschreibung

Die Erfindung betrifft eine Vorrichtung zum Steuern eines Insassenschutzmittels eines Fahrzeugs gemäß Oberbegriff von Patentanspruch 1.

Es ist von der gattungsbildenden EP 305 654 A eine Vorrichtung zum Steuern eines Insassenschutzmittels eines Fahrzeugs bekannt, die einen Körperschallsensor zum Aufnehmen von Karosserieschwingungen enthält. Karosserieteile eines Fahrzeugs beginnen infolge eines Aufpralls hochfrequent zu schwingen. Diese Körperschallschwingungen können mit einem Körperschallsensor aufgenommen werden. Ein solcher Körperschallsensor ist beispielsweise ein piezoelektrischer Sensor. Der Körperschallsensor ist dabei vorzugsweise direkt auf einem Karosseriebestandteil des Fahrzeugs aufgebracht oder in einem Steuergerät für das Insassenschutzmittel angeordnet, welches mechanisch und damit schwingungstechnisch mit der Fahrzeugkarosserie gekoppelt ist. Ein Auswerter wertet das von dem Körperschallsensor gelieferte Körperschallsignal aus und steuert abhängig davon das Insassenschutzmittel.

Aufgabe der Erfindung ist es, die Auslösung eines Insassenschutzmittels auf Basis eines ermittelten Körperschallsignals nur dann freizugeben, wenn ein Aufprall aus einer bestimmten Richtung ermittelt werden kann.

Die Erfindung löst die Aufgabe durch die Merkmale des Patentanspruchs 1.

Dabei enthält der Auswerter erste elektrische Schaltungsmittel zum Feststellen einer festgelegten Frequenz im Körperschallsignal sowie weitere elektrische Schaltungsmittel zum Ableiten einer Hüllkurve aus dem Körperschallsignal.

Die Insassenschutztechnik der vergangenen Jahre hat Insassenschutzmittel und insbesondere Airbags hervorgebracht, die aufgrund ihrer unterschiedlichen Anordnung im Fahrzeug den Insassenschutz bei einem Aufprall jeweils aus einer selektiven Richtung geben sollen. Dabei sind beispielsweise Seitenairbags in den Fahrzeugtüren angeordnet, um Insassenverletzungen bei einem Seitenaufprall zu mindern. Weiterhin sind Airbags im Lenkrad und im Armaturenbrett vor dem Beifahrersitz angeordnet, um die Insassen bei einem Frontaufprall vor den Unfallfolgen zu schützen. Es ist jedoch in der Regel nicht erforderlich, den Seitenairbag bei einem Frontaufprall auszulösen, wie auch den Frontairbag bei einem Seitenaufprall auszulösen.

Ein Körperschallsensor nimmt zunächst unabhängig von der Aufprallrichtung ein hochfrequent schwingendes Körperschallsignal bei einem Aufprall auf. Die Erfindung beruht nun auf der Erkenntnis, daß Körperschallsignale bei einem Front- und bei einem Seitenaufprall dennoch unterschiedliche Ausbildung aufweisen. So sind bestimmte Frequenzen im Körperschallsignal für einen Frontaufprall charakteristisch, wie andere Frequenzen im Körperschallsignal für einen Seitenaufprall charakteristisch sind. Wird mit der Vorrichtung beispielsweise ein Frontairbag und ein Gurtstraffer als Insassenschutzmittel angesteuert, so erteilt die Vorrichtung nach der Erfindung nur dann ein Freigabesignal zum Auslösen dieser Insassenschutzmittel, wenn im Körperschallsignal eine bestimmte für einen Frontaufprall charakteristische Frequenz erkannt wird. Ist die Vorrichtung dagegen zum Steuern eines Insassenschutzmittels zum Seitenaufprallschutz ausgebildet, so wird eine Freigabe zum Auslösen dieses Insassenschutzmittels nur dann erteilt, wenn im Körperschallsignal eine für den Seitenaufprall charakteristische Frequenz erkannt wird. Die Möglichkeit der Richtungserkennung eines Aufpralls anhand eines aufgenommenen Körperschallsignals nach der Erfindung beruht auf der unterschiedlichen Karosseriestruktur zwischen der Fahrzeugfront und dem gewöhnlich im Fahrzeugzentrum angeordneten Körperschallsensor und der Karosseriestruktur zwischen Fahrzeugseite und Fahrzeugzentrum. Infolge der unterschiedlichen mechanischen Strukturen schwingen die Karosseriebestandteile mit unterschiedlichen Frequenzen je nach Aufprallrichtung. Indem also das Körperschallsignal auf eine oder mehrere Frequenzen hin untersucht wird, kann eine oder mehrere Aufprallrichtungen erkannt oder ausgeschlossen werden.

Vorzugsweise wird eine Freigabe zum Auslösen des Insassenschutzmittels nur dann erteilt, wenn anhand oben beschriebener Auswertung eine Aufprallrichtung erkannt wird und wenn gleichzeitig das Körperschallsignal eine ausreichend große Amplitude aufweist. Dabei kann jedoch nicht ein reiner Grenzwertvergleich des Körperschallsignals zur Bewertung der Stärke des Aufpralls herangezogen werden, da ein aufprallbedingtes Körperschallsignal selbst bei einem harmlosen Aufprall hochfrequente Schwingungen mit großen Pegeln enthält. In vorteilhafterweise wird deshalb die Hüllkurve aus dem Körperschallsignal mittels Tiefpaßfilterung abgeleitet und mit einem Grenzwert verglichen.

Weitere vorteilhafte Weiterbildungen der Erfindung sind durch die Unteransprüche gekennzeichnet.

Ausführungsbeispiele der Erfindung und ihrer Weiterbildungen sind in der Zeichnung dargestellt. Es zeigen:
- Figur 1: ein erstes Blockschaltbild einer erfindungsgemäßen Vorrichtung,
- Figur 2: Signalverläufe über der Zeit in Zusammenhang mit der Auswertung des Körperschallsignals,
- Figur 3: ein Blockschaltbild einer weiteren erfindungsgemäßen Vorrichtung und
- Figur 4: ein Frequenzspektrum.

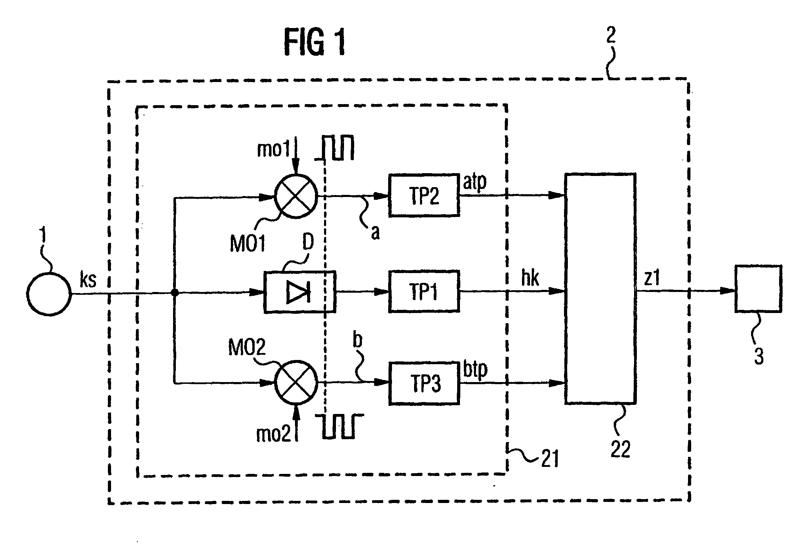

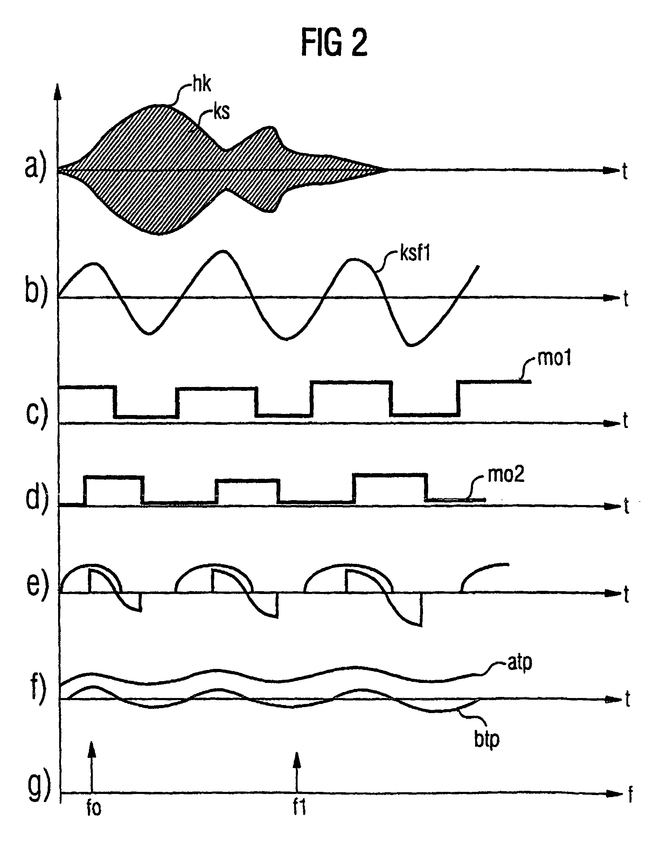

Figur 1 zeigt ein Ausführungsbeispiel der Erfindung mit einem Körperschallsensor 1, der ein Körperschallsignal ks an einen Auswerter 2 liefert. Der Auswerter 2 steuert mit einem Freigabesignal Z1 ein Insassenschutzmittel 3, z.B. einen Fahrerairbag. Der Auswerter 2 enthält gewöhnlich aus einzelnen elektrischen Bauelementen zusammengestellte Hardware-Schaltungsmittel 21 sowie einen Mikroprozessor 22. Dabei erfolgt mit Hilfe der Schaltungsmittel 21 eine Vorauswertung des Körperschallsignals ks in vorteilhafter Weise, da gewöhnliche Mikroprozessoren zur Abtastung hochfrequenter analoger Signale an ihren Eingängen nicht ausgebildet sind. Die elektrischen Schaltungsmittel können jedoch auch in Form eines Mikroprozessors umgesetzt werden. Figur 2a zeigt dabei andeutungsweise ein solches hochfrequentes Körperschallsignal ks über der Zeit.

Das Körperschallsignal ks wird zum einen über eine Diode D einem Tiefpaßfilter TP1 zugeführt, das die Hüllkurve hk aus dem Körperschallsignal ks ableitet (siehe auch Figur 2a). Das Hüllkurvensignal hk wird dem Mikroprozessor 22 zugeführt. Ferner wird das Körperschallsignal zwei Modulatoren MO1 und MO2 zugeführt. Jeder Modulator MO1 und MO2 moduliert das Körperschallsignal ks mit einem Trägersignal mO1 bzw. mo2. Die Trägersignale mo1 und mo2 sind periodische Signale, vorzugsweise Rechtecksignale mit einer festgelegten Frequenz f1. Dabei ist vorzugsweise das Trägersignal mol gegenüber dem Trägersignal mo2 um 90° phasenverschoben. Das durch Multiplikation des Körperschallsignals ks mit dem ersten Trägersignal mo1 entstandene Modulationssignal A liegt an einem Tiefpaßfilter TP2 an. Das durch Multiplikation des Körperschallsignals ks mit dem zweiten Trägersignal mo2 entstandene Modulationssignal B liegt an einem Tiefpaßfilter TP3 an. Die Ausgänge der Tiefpaßfilter TP2 und TP3 sind mit Eingängen des Mikroprozessors 22 verbunden. Die Schaltungsmittel mit den Modulatoren MO1 und MO2 dienen dazu, eine vorgegebene Frequenz im Körperschallsignal festzustellen. Ist eine solche Frequenz im Körperschallsignal ks vorhanden, so könnte gemäß Figur 2b der Körperschallsignalanteil ksf1 mit dieser Frequenz F1 von z.B. 60 kHz den dargestellten Verlauf aufweisen. In den Figuren 2c und 2d sind die zugehörigen Trägersignale mo1 und mo2 gezeigt. Da die Trägersignale mit dem Körperschallsignal ks bzw. dem Körperschallsignalanteil mit der entsprechenden Frequenz F1 nicht synchronisiert werden können, sind zwei Modulationen mit jeweils phasenverschobenen Trägersignalen mo1 und mo2 erforderlich. Figur 2e zeigt dabei die Modulationssignale a und b am Ausgang des Modulators MO1, die deutliche Pegelanteile aufweisen. Die Tiefpaßfilterung der Modulationssignale A und B gemäß Figur 2e ergibt die Signale ATP und BTP, deren zeitlicher Verlauf in Figur 2f eingezeichnet ist. Diese Signale werden dem Mikroprozessor 22 zugeführt und durch diesen quadriert und anschließend summiert. Ein abschließendes Radizieren der quadrierten und anschließend addierten Signale ATP und BTP liefert eine im Körperschallsignal enthaltene Frequenzamplitude hinsichtlich der festgelegten Frequenz F1, die in die Trägersignale mol und mo2 Eingang findet. Die Schaltungsmittel 21 in Verbindung mit dem Mikroprozessor 22 dienen also vorwiegend dazu, die Amplitude einer festgelegten Frequenz im Körperschallsignal ks zu ermitteln. Eine solche festgelegte Frequenz ist dabei charakteristisch für einen Aufprall aus einer bestimmten Richtung. Eine solche Frequenz kann durch Crashversuche von Fahrzeugen ermittelt werden. Unterschiedliche Fahrzeuge mit unterschiedlichen Karosserietypen werden dabei zu unterschiedlichen charakteristischen Frequenzen führen. Figur 2f zeigt dabei das nachgewiesene Frequenzspektrum mit der nachzuweisenden Frequenz F1 von beispielsweise 60 kHz. Ist diese Frequenz charakteristisch für einen Frontaufprall und beispielsweise untypisch für einen Seitenaufprall, so kann abhängig von dem Feststellen dieser Frequenz F1 im Körperschallsignal und insbesondere von der Amplitude des Frequenzanteils F1 im Körperschallsignal ein Freigabesignal Z1 an den dem Insassenschutz bei einem Frontaufprall dienenden Fahrerairbag erzeugt werden. Dazu wird in vorteilhafterweise die Frequenzamplitude zur Frequenz F1 mit einem Grenzwert verglichen. Wird der Grenzwert durch die Frequenzamplitude übertroffen, so ist die Frequenz F1 signifikant im Körperschallsignal ks enthalten und deutet damit auf einen Frontaufprall hin. Fehlt jedoch eine ausreichend starke Frequenzamplitude der Frequenz F1, so wird das Freigabesignal Z1 nicht erzeugt und damit ein Auslösen des Fahrerairbags 3 unterdrückt.

Die Erfindung ist aber nicht auf das Feststellen einer einzelnen festgelegten Frequenz beschränkt, sondern stellt auch das Festlegen eines für eine Aufprallrichtung charakteristischen festgelegten Frequenzbandes unter Schutz, z.B. ein Frequenzband von 58 bis 52 kHz. In einer vorteilhaften Weiterbildung der Erfindung wird das Freigabesignal Z1 aber nur erzeugt, wenn gleichzeitig mit dem Feststellen einer Mindestfrequenzamplitude ein weiterer Grenzwert durch die ermittelte Hüllkurve hk überschritten wird. Dieser weitere Grenzwert kennzeichnet die Schwere des Aufpralls im Gegensatz zu dem Grenzwert für die Frequenzamplitude, der die Abgrenzung beispielsweise eines Frontaufpralls von einem Schrägaufprall kennzeichnet. Zum Erzeugen eines Freigabesignals Z1 müssen damit vorzugsweise ein Aufprall aus der entsprechenden Richtung sowie ein Aufprall mit ausreichender Stärke durch vorbeschriebene Auswertung des Körperschallsignals ks erkannt worden sein.

Figur 2g zeigt überdies die beispielhafte Frequenz f0 einer Hüllkurve hk. Typische Hüllkurvenfrequenzen liegen im Bereich von 0 bis 500 Hz, wogegen für Aufprallrichtungen charakteristische Frequenzen sich im Bereich von 0 bis 500 kHz bewegen. Die Erfindung gestattet in vorteilhafterweise einen Nachweis dieser für Aufprallrichtungen charakteristischen und durch den Mikroprozessor 22 nicht mehr abtastbaren Frequenzen F1 durch vorgeschaltete Schaltungsmittel 21. Das Hüllkurvensignal hk dagegen kann an einem Analogeingang des Mikroprozessors aufgrund seiner geringen Frequenz angelegt werden und durch einen Analog-Digital-Wandler des Mikroprozessors 22 abgetastet und ausgewertet werden.

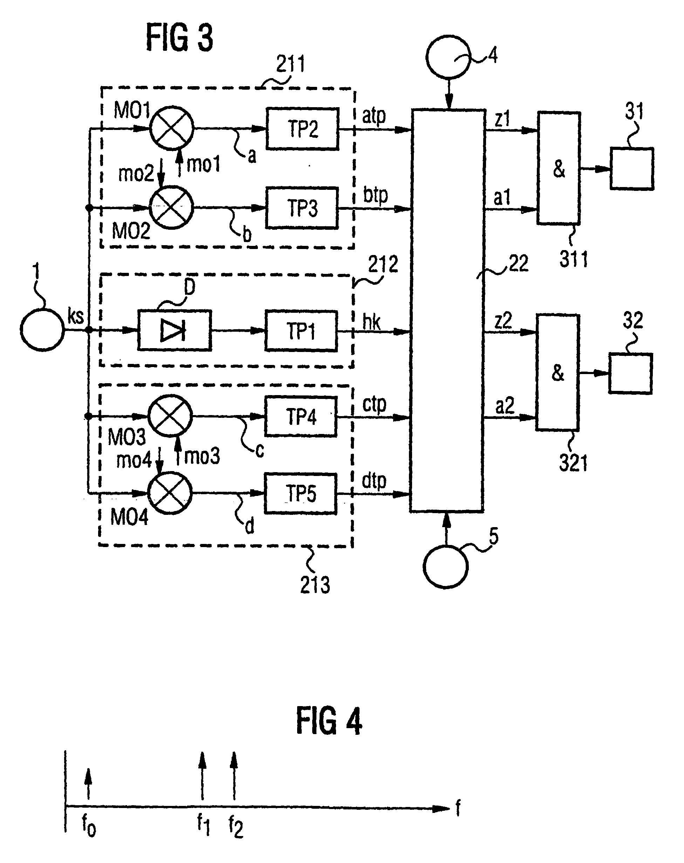

Figur 3 zeigt eine gegenüber Figur 2 erweiterte erfindungsgemäße Vorrichtung. Der Mikroprozessor 22 steuert dabei einen Airbag 31 zum Frontaufprallschutz und einen Airbag 32 zum Seitenaufprallschutz. Ferner sind ein Beschleunigungssensor 4 für Beschleunigungen parallel zur Fahrzeuglängsachse sowie ein Beschleunigungssensor 5 zur Aufnahme von Beschleunigungen quer zur Fahrzeuglängsachse verbunden. Darüber hinaus enthalten die dem Mikroprozessor 22 vorgeschalteten Schaltungsmittel nicht nur erste Schaltungsmittel 211 zum Liefern von Signalen ATP und BTP in anhand der Figur 1 erläuterter Weise sowie weitere Schaltungsmittel 212 zum Ermitteln der Hüllkurve hk. Darüber hinaus sind dritte Schaltungsmittel 213 vorgesehen, die mit den ersten Schaltungsmitteln 212 identisch ausgebildet sind. Somit enthalten die dritten Schaltungsmittel 213 Modulatoren MO3 und MO4 sowie Tiefpaßfilter TP4 und TP5. Die Funktionsweise der dritten Schaltungsmittel 213 unterscheidet sich lediglich in den zugeführten Trägerfrequenzen mo3 und mo4 von der Funktionsweise der ersten Schaltungsmittel 212. Die Trägersignale mo3 und mo4 weisen eine von der Frequenz der Trägersignale mol und mo2 unterschiedliche Frequenz f2 auf. Die dritte Schaltungsanordnung 213, der ebenfalls das Körperschallsignal ks zugeführt wird, dient also zur Vorbereitung der Ermittlung der Frequenzamplitude der Frequenz f2. Der Mikroprozessor 22 führt in der aus Figur 1 bekannten Weise durch Quadrierung der Signal CTP und DTP und einer anschließenden Addition sowie Wurzelbildung einen Vergleich mit einem Grenzwert herbei, der zum Feststellen des Vorhandenseins eines Signalanteils mit der Frequenz f2 im Spektrum des Körperschallsignals ks dient. Die Frequenz f2 sei dabei charakteristisch für einen Seitenaufprall. Bei einem Frontaufprall sei diese Frequenz im Spektrum des Körperschallsignals ks nahezu nicht vorhanden. Figur 4 zeigt solche beispielhaften Frequenzen f1 und f2 im Frequenzband, wobei die Frequenz f0 wiederum der Grundschwingung der Hüllkurve hk zuzuordnen ist.

Die Ansteuerung der Insassenschutzmittel 31 und 32 erfolgt folgendermaßen: Durch Auswertung des Längsbeschleunigungssignals des Beschleunigungssensors 4 wird ein ausreichend starker Frontaufprall erkannt. Daraufhin wird das Auslösesignal A1 an ein UND-Gatter 311 abgegeben. Ein Auslösen des Frontairbags 31 erfolgt regelmäßig jedoch nur dann, wenn der Mikroprozessor ferner das Freigabesignal Z1 an das UND-Gatter 311 liefert. Das Freigabesignal Z1 wird regelmäßig nur dann erzeugt, wenn die Hüllkurve hk einen Grenzwert überschritten hat und gleichzeitig die Frequenz f1 mittels der ersten Schaltungsmittel 211 im Körperschallsignal ks erkannt wird.

In gleicher Weise wertet der Mikroprozessor 22 das Querbeschleunigungssignal des Beschleunigungssensors 5 aus und erzeugt ein Auslösesignal A2, wenn ein ausreichend starker Aufprall erkannt wird. Der Seitenairbag 32 wird jedoch regelmäßig nur dann ausgelöst, wenn auch gleichzeitig ein Freigabesignal Z2 vorliegt. Dieses Freigabesignal Z2 wird regelmäßig dann erzeugt, wenn die Hüllkurve den Grenzwert überschreitet und gleichzeitig die Frequenz F2 durch die dritten Schaltungsmittel 213 im Frequenzspektrum des Körperschallsignals ks erkannt wird.

Die Vorrichtung nach Figur 3 hat den Vorteil, daß ein Aufprall durch mindestens zwei Sensormittel 1, 4 bzw. 1, 5 erkannt werden muß, wobei die Sensormittel 1 und 4 bzw. 5 auf unterschiedlichen physikalischen Prinzipien beruhen. Damit ist ein erhöhter Schutz vor Fehlauslösungen bei Ausfall einer der Sensoren gewährleistet. Die Sicherheit für Fehlauslösungen kann noch weiter dadurch erhöht werden, daß lediglich die Beschleunigungssignale im Mikroprozessor verarbeitet werden, eine Auswertung der Signale ATP, BTP, CTP, DTP und hk jedoch aus dem Mikroprozessor 22 herausgelöst wird und in einer Hardware-Schaltungsanordnung durchgeführt wird.

Es versteht sich, daß zahlreiche Abwandlungen der Erfindung ebenfalls unter Schutz gestellt sind. So kann das Körperschallsignal ks auf weitere Frequenzen hin untersucht werden, die genauere Information über die Aufprallrichtung und sogar ein eng definiertes Winkelsegment geben können.

## Patentansprüche

1. Vorrichtung zum Steuern eines Insassenschutzmittels eines Fahrzeugs,
- mit einem Körperschallsensor (1) zum Aufnehmen von Karosserieschwingungen, und
- mit einem Auswerter (2) zum Steuern des Insassenschutzmittels (3) abhängig von einem vom Körperschallsensor (1) abgegebenen Körperschallsignal (ks),
wobei
der Auswerter (2) elektrische Schaltungsmittel (211) zum Feststellen einer festgelegten Frequenz (f1) im Körperschallsignal (ks) enthält, und **dadurch gekennzeichnet,**
**daß** der Auswerter (2) weitere elektrische Schaltungsmittel (212) zum Ableiten einer Hüllkurve (hk) aus dem Körperschallsignal (ks) enthält, und daß der Auswerter (2) zum Erzeugen eines Freigabesignals (z1) für das Insassenschutzmittel (3) in Abhängigkeit von der Hüllkurve (hk) und von der festgestellten Frequenz (f1) ausgebildet ist.

2. Vorrichtung nach Anspruch 1, **dadurch gekennzeichnet, daß** der Auswerter (2) zum Erzeugen eines Freigabesignals (z1) für das Insassenschutzmittel (3) in Abhängigkeit von der festgestellten Frequenz (f1) ausgebildet ist.

3. Vorrichtung nach einem der vorhergehenden Ansprüche, **dadurch gekennzeichnet, daß** der Auswerter (2) dritte elektrische Schaltungsmittel (213) zum Feststellen zumindest einer weiteren festgelegten Frequenz (f2) im Körperschallsignal (ks) enthält.

4. Vorrichtung nach Anspruch 3, **dadurch gekennzeichnet, daß** sie zum Steuern mehrerer Insassenschutzmittel (31,32) ausgebildet ist, und daß der Auswerter (2) zum Auswählen eines Insassenschutzmittels (31,32) in Abhängigkeit der festgestellten Frequenzen (f1,f2) ausgebildet ist.

5. Vorrichtung nach einem der vorhergehenden Ansprüche, **dadurch gekennzeichnet, daß** die weiteren Schaltungsmittel (212) zum Erzeugen der Hüllkurve (hk) ein Tiefpaßfilter (TP1) enthalten.

6. Vorrichtung nach einem der vorhergehenden Ansprüche, dadurch gekennzeichnte, daß die Schaltungsmittel (211) einen Modulator (MO1) zum Multiplizieren des Körperschallsignals (ks) mit einem periodischen Signal (mo1), das die festgelegte Frequenz (f1) aufweist, enthalten,sowie einen weiteren Modulator (MO2) zum Multiplizieren des Körperschallsignals (ks) mit einem weiteren periodischen Signal (mo2), das die festgelegte Frequenz (f1) aufweist und eine zum ersten periodischen Signal (mol) verschobene Phase.

7. Vorrichtung nach Anspruch 6, **dadurch gekennzeichnet, daß** die Ausgänge des ersten und des weiteren Modulators (MO1,MO2) mit jeweils einem Tiefpaßfilter (TP2,TP3) verbunden sind.

8. Vorrichtung nach Anspruch 7, **dadurch gekennzeichnet, daß** der Auswerter (2) einen Mikroprozessor (22) enthält, der mit den Tiefpaßfiltern (TP1,TP2,TP3) verbunden ist.

9. Vorrichtung nach Anspruch 7 oder Anspruch 8, **dadurch gekennzeichnet, daß** der Auswerter (2) zum Quadrieren der Signale an den Ausgängen der Tiefpaßfilter (TP2,TP3) zum Addieren der quadrierten Signale und zum anschließenden Radizieren zu einer Frequenzamplitude ausgebildet ist.

10. Vorrichtung nach Anspruch 5 und Anspruch 9, **dadurch gekennzeichnet, daß** der Auswerter (2) zum Erzeugen des Freigabesignals (z1) für das Insassenschutzmittel (3) ausgebildet ist, wenn die Frequenzamplitude einen ersten Grenzwert überschreitet, und wenn die Hüllkurve (hk) einen weiteren Grenzwert überschreitet.

11. Vorrichtung nach Anspruch 3, **dadurch gekennzeichnet, daß** die dritten Schaltungsmittel (213) einen Modulator (MO3) zum Multiplizieren des Körperschallsignals (ks) mit einem periodischen Signal (mo3), das die weitere festgelegte Frequenz (f2) aufweist, enthalten sowie einen weiteren Modulator (MO4) zum Multiplizieren des Körperschallsignals (ks) mit einem weiteren periodischen Signal (mo4), das die weitere festgelegte Frequenz (f2) aufweist und eine zum ersten periodischen Signal verschobene Phase.

12. Vorrichtung nach Anspruch 11, **dadurch gekennzeichnet, daß** die Ausgänge des ersten und des weiteren Modulators (MO3,MO4) der dritte Schaltungsmittel (213) mit jeweils einem Tiefpaßfilter (TP4,TP5) verbunden ist.

13. Vorrichtung nach Anspruch 12, **dadurch gekennzeichnet, daß** der Auswerter (2) zum Quadrieren der Signale an den Ausgängen der Tiefpaßfilter (TP4,TP5) der dritten Schaltungsmittel (213), zum Addieren der quadrierten Signale und zum anschließenden Radizieren zu einer weiteren Frequenzamplitude ausgebildet ist.

14. Vorrichtung nach Anspruch 13, **dadurch gekennzeichnet, daß** der Auswerter (2) zum Erzeugen eines weiteren Freigabesignals (z2) für ein weiteres Insassenschutzmittel ausgebildet ist, wenn die weitere Frequenzamplitude einen dritten Grenzwert überschreitet und wenn die Hüllkurve den weiteren Grenzwert überschreitet.

15. Vorrichtung nach einem der vorhergehenden Ansprüche, **dadurch gekennzeichnet, daß** der Auswerter (2) zum Erzeugen des Freigabesignals (z1) für das Insassenschutzmittel (3) ausgebildet ist, wenn die festgelegte Frequenz festgestellt wird und wenn die Hüllkurve (hk) einen weiteren Grenzwert überschreitet.

## Claims

1. Device to control an occupant protection means of a vehicle,
- with a structure-borne sound sensor (1) to detect body vibrations, and
- with an evaluator (2) to control the occupant protection means (3) depending on a structure-borne sound signal (ks) output from the structure-borne sound sensor (1),
with the evaluator (2) containing an electrical circuit means (211) for determining a specified frequency (f1) in the structure-borne sound signal (ks) and **characterised in that** the evaluator (2) has additional electrical circuit means (212) to derive an envelope curve (hk) from the structure-borne sound signal (ks), and that the evaluation (2) is designed to generate an enable signal (z1) for the occupant protection means (3) depending on the envelope curve (hk) and on the determined frequency (f1).

2. Device according to Claim 1, **characterised in that** the evaluator (2) is designed to generate an enable signal (z1) for the occupant protection means (3) depending on the determined frequency (f1).

3. Device according to one of the preceding claims, **characterised in that** the evaluator (2) has a third electrical circuit means (213) for determining at least one additional specified frequency (f2) in the structure-borne sound signal (ks).

4. Device according to Claim 3, **characterised in that** it is designed to control several occupant protection means (31, 32), and that the evaluator (2) is designed to select an occupant protection means (31, 32) depending on the determined frequencies (f1, f2).

5. Device according to one of the preceding claims, **characterised in that** the additional circuit means (212) contains a low-pass filter (TP1) to generate the envelope curve (hk).

6. Device according to one of the preceding claims, **characterised in that** the circuit means (211) has a modulator (MO1) to multiply the structure-borne sound signal (ks) by a periodic signal (mo1) that has the specified frequency (f1), and an additional modulator (MO2) to multiply the structure-borne sound signal (ks) by an additional periodic signal (mo2) that has the specified frequency (f1) and a phase which is displaced relative to the first periodic signal (mo1).

7. Device according to Claim 6, **characterised in that** the outputs of the first and additional modulators (MO1, MO2) are each connected to a low-pass filter (TP2, TP3).

8. Device according to Claim 7, **characterised in that** the evaluator (2) contains a microprocessor (22) that is connected to the low-pass filters (TP1, TP2, TP3).

9. Device according to Claim 7 or Claim 8, **characterised in that** the evaluator (2) is designed to square the signals at the outputs of the low-pass filters (TP2, TP3), to add the squared signals and then to extract the square root to a frequency amplitude.

10. Device according to Claim 5 and Claim 9, **characterised in that** evaluator (2) is designed to generate the enable signal (z1) for the occupant protection means (3) if the frequency amplitude of a first limit value is exceeded and the envelope curve (hk) exceeds an additional limit value.

11. Device according to Claim 3, **characterised in that** the third circuit means (213) has a modulator (MO3) to multiply the structure-borne sound signal (ks) by a periodic signal (mo3) containing the additional specified frequency (f2), and an additional modulator (MO4) for multiplying the structure-borne sound signal (ks) by an additional periodic signal (mo4) containing an additional specified frequency (f2) and a phase which is displaced relative to the first period signal.

12. Device according to Claim 11, **characterised in that** the outputs of the first and additional modulators (MO3, MO4) of the third circuit means (213) are connected in each case to a low-pass filter (TP4, TP5).

13. Device according to Claim 12, **characterised in that** the evaluator (2) is designed to square the signals at the outputs of the low-pass filter (TP4, TP5) of the third circuit means (213), to add the squared signal and then to extract the square root to an additional frequency amplitude.

14. Device according to Claim 13, **characterised in that** the evaluator (2) is designed to generate an additional enable signal (z2) for an additional occupant protection means, if the additional frequency amplitude exceeds a third limit value and the envelope curve exceeds the other limit value.

15. Device according to one of the preceding claims, **characterised in that** evaluator (2) is designed to generate the enable signal (z1) for the occupant protection means (3) if the specified frequency is determined and the envelope curve (hk) exceeds an additional limit value.

## Revendications

1. Dispositif de commande d'un moyen de protection des occupants d'un véhicule, comportant :
- un détecteur de bruit de structure (1) pour capter des oscillations de carrosserie, et
- un dispositif d'exploitation (2) pour la commande du moyen de protection des occupants (3) en fonction d'un signal de bruit de structure (ks) fourni par le détecteur de bruit de structure (1),
le dispositif d'exploitation (2) contenant un montage électrique (211) pour détecter une fréquence prédéterminée (f1) dans le signal de bruit de structure (ks), **caractérisé en ce que**
le dispositif d'exploitation (2) comprend un autre montage électrique (212) pour engendrer une courbe enveloppe (hk) à partir du signal de bruit de structure (ks), et **en ce que** le dispositif d'exploitation (2) est conçu pour engendrer un signal d'autorisation (z1) pour le moyen de protection des occupants (3) en fonction de la courbe enveloppe (hk) et de la fréquence détectée (f1).

2. Dispositif selon la revendication 1, **caractérisé en ce que** le dispositif d'exploitation (2) est conçu pour produire un signal d'autorisation (z1) pour le moyen de protection des occupants (3) en fonction de la fréquence détectée (f1).

3. Dispositif selon l'une des revendications précédentes, **caractérisé en ce que** le dispositif d'exploitation (2) comprend un troisième montage (213) pour détecter au moins une autre fréquence prédéterminée (f2) dans le signal de bruit de structure (ks).

4. Dispositif selon la revendication 3, **caractérisé en ce qu'**il est conçu pour la commande de plusieurs moyens de protection des occupants (31, 32), et **en ce que** le dispositif d'exploitation (2) est conçu pour choisir un moyen de protection des occupants (31, 32) en fonction des fréquences détectées (f1, f2).

5. Dispositif selon l'une des revendications précédentes, **caractérisé en ce que** l'autre montage (212) de production de la courbe enveloppe (hk) comprend un filtre passe-bas (TP1).

6. Dispositif selon l'une des revendications précédentes, **caractérisé en ce que** le montage (211) comporte un modulateur (MO1) pour multiplier le signal de bruit de structure (ks) par un signal périodique (mo1), qui comporte la fréquence prédéterminée (f1), ainsi qu'un autre modulateur (MO2) pour multiplier le signal de bruit de structure (ks) par un autre signal périodique (mo2) qui contient la fréquence prédéterminée (f1) et présente un déphasage par rapport au premier signal périodique (mo1).

7. Dispositif selon la revendication 6, **caractérisé en ce que** les sorties des premier et deuxième modulateurs (MO1, MO2) sont connectées respectivement à des filtres passe-bas (TP2, TP3).

8. Dispositif selon la revendication 7, **caractérisé en ce que** le dispositif d'exploitation (2) comprend un microprocesseur (22) qui est relié aux filtres passe-bas (TP1, TP2, TP3).

9. Dispositif selon la revendication 7 ou la revendication 8, **caractérisé en ce que** le dispositif d'exploitation (2) est conçu pour élever au carré les signaux de sortie des filtres passe-bas (TP1, TP3), pour additionner les signaux élevés au carré et pour ensuite extraire la racine carrée pour obtenir une amplitude de fréquence.

10. Dispositif selon la revendication 5 et la revendication 9, **caractérisé en ce que** le dispositif d'exploitation (2) est conçu pour la production du signal d'autorisation (z1) pour le moyen de protection des occupants (3), si l'amplitude de fréquence dépasse une première valeur limite et si la courbe enveloppe (hk) dépasse une autre valeur limite.

11. Dispositif selon la revendication 3, **caractérisé en ce que** le troisième montage (213) comprend un modulateur (MO3) pour multiplier le signal de bruit de structure (ks) par un signal périodique (mo3), qui comporte l'autre fréquence prédéterminée (f2), ainsi qu'un autre modulateur (MO4) pour multiplier le signal de bruit de structure (ks) par un autre signal périodique (mo4), qui comporte l'autre fréquence prédéterminée (f2) et présente un déphasage par rapport au premier signal périodique.

12. Dispositif selon la revendication 11, **caractérisé en ce que** les sorties des premier et de l'autre modulateurs (MO3, MO4) du troisième montage (213) sont connectées respectivement à des filtres passe-bas (TP4, TP5).

13. Dispositif selon la revendication 12, **caractérisé en ce que** le dispositif d'exploitation (2) est conçu pour élever au carré les signaux de sortie des filtres passe-bas (TP4, TP5) du troisième montage (213), pour additionner les signaux élevés au carré puis extraire la racine carrée pour obtenir une autre amplitude de fréquence.

14. Dispositif selon la revendication 13, **caractérisé en ce que** le dispositif d'exploitation (2) est conçu pour la production d'un autre signal d'autorisation (z2) pour un autre moyen de protection des occupants, si l'autre amplitude de fréquence dépasse une troisième valeur limite et si la courbe enveloppe dépasse l'autre valeur limite.

15. Dispositif selon l'une des revendications précédentes, **caractérisé en ce que** le dispositif d'exploitation (2) est conçu pour produire un signal d'autorisation (z1) pour le moyen de protection des occupants (3), si la présence de la fréquence prédéterminée est constatée et si la courbe enveloppe (hk) dépasse une autre valeur limite.
